# EUROPÄISCHE PATENTANMELDUNG

(11) **EP 1 727 073 A2**
(43) Veröffentlichungstag der Anmeldung: **29.11.2006**
(21) Anmeldenummer: 06111938.4
(22) Anmeldetag: 29.03.2006
(51) Int. Cl.: G06K 9/00, G06K 9/20, B60R 21/00

(54) **Vorrichtung zur Insassenerkennung**

(30) Priorität: 23.05.2005 DE 102005023694
(71) Anmelder: ROBERT BOSCH GMBH, 70442 Stuttgart (DE)
(72) Erfinder: Loewe, Andreas, 31246 Lahstedt (DE); Bothe, Hans-Dieter, 30926 Seelze (DE); Trinh, Hoang, 71254 Ditzingen (DE); Freienstein, Heiko, 71263 Weil Der Stadt (DE); Engelberg, Thomas, 31137 Hildesheim (DE); Luther, Marc, 31228 Peine (DE)

(57) **Zusammenfassung**

Es wird eine Vorrichtung zur Insassenerkennung mit einer bildgebenden ersten Sensorik (11) und einer Beleuchtung (10) vorgeschlagen, wobei die Vorrichtung eine Bildwiederholrate der ersten Sensorik (11) und eine Lichtleistung der Beleuchtung (10) in Abhängigkeit von einem Signal einer eine Fahrzeugsituation erfassenden zweiten Sensorik (13) anpasst.

## Beschreibung

### Stand der Technik

Die Erfindung geht aus von einer Vorrichtung zur Insassenerkennung nach der Gattung des unabhängigen Patentanspruchs.

Aus US 6,005,958 ist bereits eine Vorrichtung zur Insassenerkennung in einem Fahrzeug bekannt, bei der mittels einer Kamera der Insasse erkannt wird und wobei auch eine zusätzliche Beleuchtung vorgesehen ist.

### Vorteile der Erfindung

Die erfindungsgemäße Vorrichtung zur Insassenerkennung mit den Merkmalen des unabhängigen Patentanspruchs hat demgegenüber den Vorteil, dass durch die adaptive Ansteuerung der Bildwiederholrate und der Lichtleistung der Beleuchtung in Abhängigkeit von einem Signal einer die Fahrsituation charakterisierenden Sensorik in solchen Situationen, in denen insbesondere eine schnelle Kopfbewegung und damit eine hohe Bildwiederholrate erforderlich ist, auf diese hohe Bildwiederholrate automatisch geschaltet werden kann. Bei einer hohen Bildwiederholrate und damit einer kurzen Belichtungszeit ist auch eine starke Beleuchtung notwendig, so dass auch gemäß der Erfindung vorteilhafter Weise die Beleuchtungsstärke in solchen Situationen dann erhöht wird. Führt die Situation, die zur Erhöhung führt, nicht zu einem Unfall, dann wird, wenn die Vorrichtung mittels der Fahrzeugsensoren erkennt, dass die gefährliche Situation nicht mehr vorliegt, die Beleuchtungsstärke und die Bildwiederholrate wieder auf eine voreingestellte Normaleinstellung geändert. Insgesamt wird durch die Erfindung der Einsatz eines wesentlich einfacheren, leichteren, kompakteren und kostengünstigeren Sensorsystems ermöglicht, weil alle Komponenten nur für den Regelbetrieb ausgelegt werden. Die Lichtaustrittsfläche der Beleuchtung kann relativ klein gehalten werden, was designerische Vorteile bietet. Der elektrische Leistungsbedarf und die Abwärmeerzeugung der gesamten Vorrichtung werden während des Regelbetriebs deutlich gesenkt.

Durch die in den abhängigen Ansprüchen aufgeführten Maßnahmen und Weiterbildungen sind vorteilhafte Verbesserungen der im unabhängigen Patentanspruch angegebenen Vorrichtung zur Insassenerkennung möglich.

Besonders vorteilhaft ist, dass die Vorrichtung als die Fahrzeugsituation erfassender Sensoren kinematische Sensoren beispielsweise Beschleunigungs-, Drehraten- oder Geschwindigkeitssensoren oder Umfeldsensoren, beispielsweise eine nach außen gerichtete Videosensorik, Radarsensorik oder eine Kontaktsensorik aufweist. Damit kann dann umfassend die Fahrzeugsituation charakterisiert werden, insbesondere durch die kinematischen Sensoren können Wank-, Schleuder-, Überrollvorgänge oder auch Drehbewegungen des Fahrzeugs um seine Hochachse erkannt und als gefährliche Situation eingestuft werden. Dann werden die Bildwiederholrate und die Lichtleistung entsprechend erhöht, um dieser gefährlichen Situation Rechnung zu tragen.

Weiterhin ist es vorteilhaft, dass die Vorrichtung auch in Abhängigkeit von einem Signal der die Fahrzeugsituation charakterisierenden Sensorik einen Prozessor, der zur Signalverarbeitung mit der bildgebenden Sensorik koppelbar ist, ansteuert, um die Rechenleistung des Prozessors zu erhöhen. Die Rechenleistung kann vorteilhafter Weise dadurch erhöht werden, in dem die Taktfrequenz oder eine Kernspannung des Prozessors erhöht wird. Diese Technologie ist bereits aus der PC-Technik bekannt. Insbesondere Notebook - Prozessoren senken, wenn nicht die volle Rechenleistung gebraucht wird, ihre Stromaufnahme durch herunterregeln des Taktes und ggf. der Betriebsspannung (z.B. "Speed-Step - Technologie"). Im Gegensatz zu dieser bekannten Technologie, bei der der Prozessor selbst seinen Lastzustand erkennt und dann leider zum "Aufwachen" einige Zeit benötigt, wird erfindungsgemäß ein externes Signal zur Steuerung der Taktfrequenz und der Spannung herangezogen.

Darüber hinaus ist es von Vorteil, dass die Beleuchtung in solch gefährlichen Situationen, in denen eine erhöhte Lichtstärke notwendig ist, nur noch die Anforderungen der Laserklasse 1M oder 3B erfüllt werden, da in solchen gefährlichen Situationen die Wahrscheinlichkeit gering ist, dass der Fahrzeuginsasse in die Leuchtquellen schaut und damit Schaden an seinem Sehsystem nimmt. Hier kann dann in einer Güterabwägung die Leuchtstärke hochgefahren werden, um den Fahrzeuginsassen präzise zu erfassen, so dass damit die Personenschutzmittel optimal angesteuert werden können.

Es ist jedoch vorteilhafter Weise auch möglich, dass die Datenrate, mit der die Signale von der bildgebenden Sensorik, also einer Kamera, übertragen werden, gesenkt wird, indem unwichtige Bildbereiche ausgeblendet werden.

### Zeichnung

Ausführungsbeispiele der Erfindung sind in der Zeichnung dargestellt und werden in der nachfolgenden Beschreibung näher erläutert.

Es zeigen
- Figur 1: ein Blockschaltbild der erfindungsgemäßen Vorrichtung und
- Figur 2: ein Flussdiagramm.

### Beschreibung

Für die intelligente Auflösung von Personenschutzmitteln wird auch der Einsatz von bildgebenden Sensoren, wie Videosensoren zur Überwachung des Fahrzeuginnenraums untersucht. Dabei wird mit Hilfe einer oder mehrerer Videokameras und einer Auswerteeinheit die Sitzbelegung klassifiziert und ggf. die Kopfposition der Fahrzeuginsassen bestimmt. Die Ergebnisse dieser Bildauswertung sollen eine situationsangepasste Auslösung der Personenschutzmittel ermöglichen.

Um auch bei Dunkelheit z. B. bei Nachtfahrten, Tunneldurchfahrten und anderen Videoinformationen zu erhalten, muss der Fahrzeuginnenraum künstlich beleuchtet werden. Dies geschieht durch für den Menschen unsichtbarer Infrarotstrahlung, die in der Regel durch Halbleiterbauelemente wie Leuchtdioden oder Laserdioden erzeugt wird. Die derzeit verwendeten Videosensoren sind in der Lage, diese Strahlung zu detektieren und die gewünschten Videosignale zu liefern.

Bei der Dimensionierung der Beleuchtung muss davon ausgegangen werden, dass ein Teil des Fahrzeuginnenraums direkter Sonneneinstrahlung ausgesetzt ist, während andere Teile nur von der künstlichen Lichtquelle beleuchtet werden. Vorzugsweise wird, um in beiden Teilbereichen ausreichende Videoinformation zu erhalten, die Lichtleistung der künstlichen Beleuchtung in der Größenordnung der Sonneneinstrahlung liegen.

Beim Aufbau entsprechend leistungsfähiger Beleuchtungseinheiten sind die Bestimmungen gemäß Laserschutzverordnung maßgeblich. Um eine Gefährdung der Fahrzeuginsassen durch die Beleuchtung auszuschließen muss die Lichtquelle der Laserklasse 1 (augensicher) entsprechen. Die Bestimmungen zur Einhaltung der Laserklassen geben stark vereinfacht die maximale Leistungsdichte in der Nähe der Lichtquelle vor. Da die Größe der Lichtaustrittsöffnung durch designerische und bauliche Vorgaben stark eingeschränkt ist, darf die angegebene Lichtleistung einen Maximalwert nicht überschreiten.

### DIN EN 608 25 unterscheidet folgende Laserklassen (stark vereinfacht):

Laserklasse 1: augensicher auch bei längerer Bestrahlung, auch bei Betrachtung mit optischen Geräten.

Laserklasse 1M: augensicher auch bei längerer Bestrahlung.

Laserklasse 2: nur für sichtbare Strahlung.

Laserklasse 3R: augensicher bei kurzzeitiger unabsichtlicher Bestrahlung.

Laserklasse 3B: Gefahr durch Blick in den direkten Strahl oder spiegelnde Reflexionengefahr, leichter Hautverletzungen.

Laserklasse 4: Gefahr durch direkten Strahl oder die diffuse Reflexionen, Gefahr für Haut, Brandgefahr.

Die minimal erforderliche Lichtleistung wird durch die Eigenschaften der bildaufnehmenden Sensorik, das sind die Dunkelempfindlichkeit, der Dynamikumfang und die Belichtungsdauer vorgegeben. Kürzere Belichtungszeiten erfordern eine höhere Lichtleistung. Die Belichtungsdauer bestimmt die mögliche Bildwiederholrate. Während zur Sitzbelegungsklassifikation geringe Bildwiederholraten, d.h. nur wenige Bilder pro Sekunde, ausreichend sind und somit die Belichtungsdauer recht groß gewählt werden kann, sind die Anforderungen an eine Kopfpositionsbestimmung wesentlich höher. Dies gilt insbesondere dann, wenn sich beispielsweise während eines Aufpralls der Kopf eines Insassen sehr schnell bewegt und während dieser Bewegung weiterhin verfolgt werden soll. Die hier benötigten Bildwiederholraten liegen in der Größenordnung von 100 Bildern pro Sekunde.

Ähnlich wie die Bildwiederholrate steigen die Anforderungen an den Prozessor, der die Signalverarbeitung der Bildsignale leistet. Gegenstand der Erfindung ist eine situationsangepasste Ansteuerung einer Vorrichtung zur Insassen zur Erfassung des Insassen mittels einer bildgebenden Sensorik unter Infrarotbeleuchtung für den Innenraum des Fahrzeugs. Während des Regelbetriebs, d.h. im normalen Fahrzeugbetrieb, werden alle Anforderungen an Augensicherheit nach Laserklasse 1, eine thermische Stabilität des Beleuchtungs- und Videosystems und eine Funktionserfüllung bei niedrigen Bildwiederholraten erfüllt.

Wird durch am Fahrzeug angebrachte Sensoren eine Fahrsituation mit hohen Beschleunigungen, z. B. eine Notbremsung, ein schleuderndes Fahrzeug oder ein Aufprall ermittelt, die eine höhere Bildwiederholrate des Videosensors erfordern, dann wird die Bildwiederholrate entsprechend erhöht.

Gleichzeitig wird die Beleuchtungsstärke soweit erhöht, dass die Sensorfunktion auch bei kurzen Belichtungszeiten gegeben ist. Durch eine Erhöhung der Prozessortaktfrequenz bei gleichzeitiger Steigerung der Prozessorkernspannung wird die benötigte Rechenleistung zur Verfügung gestellt.

Bei der Leistungssteigerung der Beleuchtung wird davon ausgegangen, dass bei hohen Beschleunigungen im Fahrzeug beispielsweise bei einer Notbremsung die Anforderungen an die Augensicherheit nach Laserklasse 1 nicht mehr erfüllt werden müssen. Bei hohen Beschleunigungen ist es nicht mehr möglich, für einen ausgedehnten Zeitraum mit optischen Geräten direkt in die Lichtquelle zu blicken. Kann dieses ausgeschlossen werden, so genügt die Zertifizierung nach Laserklasse 1M.

Bei noch stärkeren Beschleunigungen, wie sie bei einem Aufprall auftreten, wird der Lidschlussreflex des Menschen ausgelöst. Dadurch können Bildwiederholrate und Beleuchtungsleistung noch weiter erhöht werden. Die Grenzwerte für Laserklasse 3B können dabei erreicht werden.

Die eingesetzten Halbleiterlichtquellen sind kurzfristig in der Lage, die geforderten höheren Lichtleistungen zu erzeugen, ohne Schaden zu nehmen. Bei einem kurzfristigen Betrieb oberhalb der spezifizierten maximalen Leistung erfolgt kein spontaner Ausfall des Leuchtmittels, sondern lediglich eine verstärkte Alterung. Dieses gilt ebenfalls für eventuell zur Ansteuerung der Beleuchtung eingesetzte Leistungselektronik.

Da die zuvor beschriebene Fahrsituation nur für einen kurzen Zeitraum auftritt, können die erreichten hohen Beleuchtungsstärken beim Design der Verlustwärmeableitung unter Dimensionierung der Leuchtmittel und der Anschlusselektronik außer Acht gelassen werden.

Die Bildwiederholrate wird durch einen Taktgeber im Steuergerät vorgegeben. Bei einer Steigerung der Bildwiederholrate muss lediglich beachtet werden, dass alle Bilddaten in der zur Verfügung stehenden Zeit an das Steuergerät übertragen und dort verarbeitet werden können.

Eine deutliche Reduktion der zur übertragenden Datenmenge kann dabei durch Ausblenden von nicht relevanten Bildbereichen z. B. des Fußraums oder des hinteren Fahrzeugbereichs erfolgen.

Das Erhöhen des Prozessortakts bei gleichzeitiger Steigerung der Prozessorkernspannung ist als so genanntes Overclocking aus der PC-Technik bekannt. Dabei erfolgt die Wahl der Kernspannung statisch. Beim Overclocking wird davon ausgegangen, dass der Prozessor dauerhaft außerhalb der Spezifikation betrieben wird. Entsprechend hoch sind die Anforderungen an Spannungsversorgungen und Wärmeableitungen.

In dem hier beschriebenen Szenario wird der Prozessor hinsichtlich Taktfrequenz und Kernspannung nur kurzzeitig außerhalb der Spezifikation betrieben. Dieser Betrieb hat auf die mittlere Leistungsaufnahmen und Wärmeabgabe einen zu vernachlässigenden Einfluss. Besondere Maßnahmen zur Kühlung der CPU und Stabilisierung der Spannungsversorgung sind nicht nötig.

Durch die beschriebene Erfindung wird der Einsatz eines wesentlich einfacheren, leichteren, kompakteren und kostengünstigeren Sensorsystems ermöglicht. weil alle Komponenten nur für den Regelbetrieb ausgelegt werden.

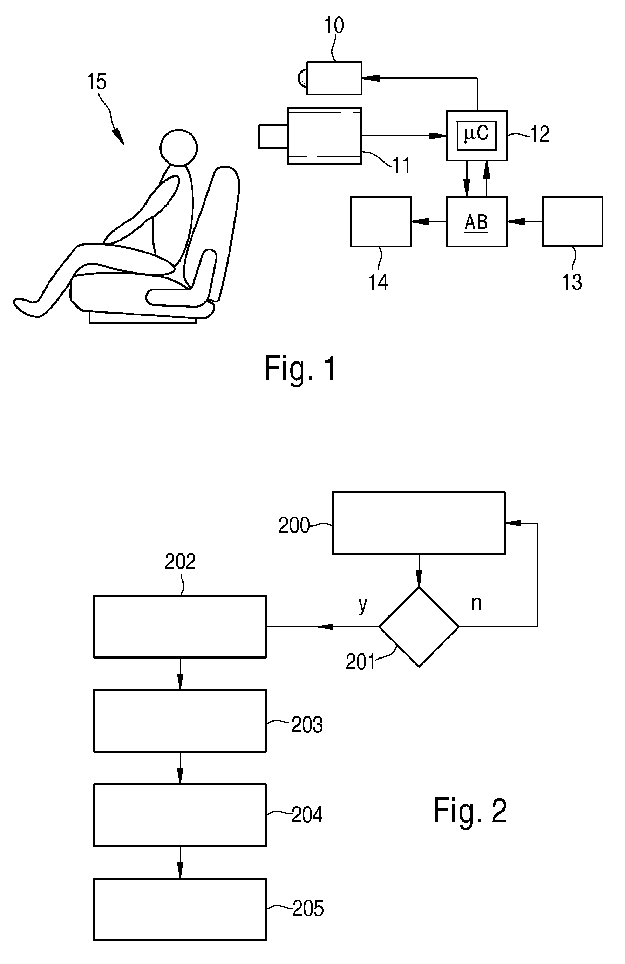

Figur 1 zeigt in einem Blockschaltbild die erfindungsgemäße Vorrichtung. Mit einer Kamera 11 wird eine Person 15 auf einem Fahrzeugsitz erfasst. Dabei ist die Kamera 11 auf die Person 15 ausgerichtet. Die Signale der Kamera 11 werden einem Steuergerät 12 zugeführt. Dort werden sie von einem Prozessor µC verarbeitet. Durch das Steuergerät 12 wird ein Leuchtmittel als Beleuchtung 10 angesteuert. Dabei kann es sich um Leuchtdioden oder Laserdioden handeln, die im Infrarotbereich Licht emittieren. Das Steuergerät 12 ist über Datenein-, Datenausgänge mit einem Airbagsteuergerät AB verbunden. Das Steuergerät AB erhält Daten von einer Sensorik 13, die Beschleunigungssensoren, Umfeldsensoren, Kontaktsensoren und andere Insassensensoren oder Unterkombinationen umfasst, wobei das Airbagsteuergerät AB Personenschutzmittel 14 wie Airbags, Gurtstraffer und/oder Fußgängerschutzmittel ansteuert.

Das Airbagsteuergerät AB stellt dem Steuergerät 12 die Daten über die Fahrzeugsituation zur Verfügung. Dabei können auch Daten von einem Bremsassistenten, einem Bremssteuergerät oder einer Fahrdynamikregelung wie ESP zur Verfügung gestellt werden. Diese kinematischen Sensoren, die die Bewegung des Fahrzeugs aufnehmen, können auch in einer ausgelagerten Sensorplattform vorhanden sein. In Abhängigkeit von diesen Daten wird die Bildwiederholrate der Kamera 11 angepasst. In einer gefährlichen Situation wird die Bildwiederholrate erhöht, d. h. bei einer hohen gemessenen Verzögerung des Fahrzeugs erhöht sich die Bildwiederholrate der Kamera 11 und die Lichtleistung der Beleuchtung 10 wird dementsprechend erhöht, um die benötigte Belichtung in der kurzen Belichtungszeit zu erreichen. Um den gestiegenen Anforderungen gerecht zu werden, wird auch der Prozessor µC vorzugsweise in seiner Leistungsfähigkeit, d.h. seiner Rechenleistung, erhöht, indem die Taktfrequenz und die Kernspannung erhöht werden. Alternativ ist es jedoch möglich, dass der Prozessor so ausgelegt ist, dass dies nicht notwendig ist.

Als Kamera 11 kann eine Monobildkamera aber auch eine Stereobildkamera oder andere Kameras verwendet werden.

Figur 2 zeigt in einem Flussdiagramm wie die erfindungsgemäße Vorrichtung funktioniert. In Verfahrensschritt 200 wird die Situation des Fahrzeugs durch die Fahrzeugsensoren erfasst. Dabei wird untersucht, ob sich das Fahrzeug in einer gefährlichen Situation befindet. Durch Beschleunigungssensoren kann auf eine Verzögerung infolge einer Kollision geschlossen werden. Durch Drehratensensoren kann auf Drehbewegungen des Fahrzeugs, insbesondere Überschlagsvorgänge geschlossen werden. Mittels einer Umfeldsensorik kann auf mögliche oder unvermeidliche Kollisionen geschlossen werden. Mittels einer Fahrdynamikregelung kann auf Schleuder- oder andere das Fahrzeug und die Insassen gefährdende Bewegungen des Fahrzeugs geschlossen werden. In Abhängigkeit davon wird in Verfahrensschritt 201 entschieden, ob eine Anpassung der Komponenten der Vorrichtung zur Insassenerkennung notwendig ist. Ist das nicht so, wird zurück zu Verfahrensschritt 200 gesprungen. Ist das jedoch der Fall, dann wird in Verfahrensschritt 202 die Lichtleistung der Beleuchtung 10 erhöht, in Verfahrensschritt 203 die Bildwiederholrate der Kamera 11 und in Verfahrensschritt 204 die Rechenleistung des Prozessors µC. Zusätzlich wird zur Reduzierung der Datenrate zur Datenübertragung zwischen dem der Kamera 11 und dem Steuergerät 12 ein Ausblenden von nicht wichtigen Bildteilen vorgenommen.

## Patentansprüche

1. Vorrichtung zur Insassenerkennung mit einer bildgebenden ersten Sensorik (11) und einer Beleuchtung (10), **dadurch gekennzeichnet, dass** die Vorrichtung derart konfiguriert ist, dass die Vorrichtung eine Bildwiederholrate der ersten Sensorik (11) und eine Lichtleistung der Beleuchtung (10) in Abhängigkeit eines Signals einer eine Fahrzeugsituation erfassenden zweiten Sensorik (13) anpasst.

2. Vorrichtung nach Anspruch 1, **dadurch gekennzeichnet, dass** die zweite Sensorik als kinematische dritte Sensorik und/oder als Umfeldsensorik und/oder als Kontaktsensorik ausgebildet ist.

3. Vorrichtung nach Anspruch 1 oder 2, **dadurch gekennzeichnet, dass** die Vorrichtung derart konfiguriert, dass die Vorrichtung einen Prozessor (µC), der zur Signalverarbeitung mit der ersten Sensorik (11) koppelbar ist, in Abhängigkeit von dem Signal in seiner Rechenleistung anpasst.

4. Vorrichtung nach Anspruch 3, **dadurch gekennzeichnet, dass** die Vorrichtung durch eine Veränderung einer Taktfrequenz und/oder einer Kernspannung des Prozessors (µC) die Rechenleistung anpasst.

5. Vorrichtung nach einem der vorhergehenden Ansprüche, **dadurch gekennzeichnet, dass** die Vorrichtung die Beleuchtung (10) in Abhängigkeit des Signals derart ansteuert, dass die Beleuchtung die Laserklasse 1M oder 3B erfüllt.

6. Vorrichtung nach einem der vorhergehenden Ansprüche, **dadurch gekennzeichnet, dass** die Vorrichtung in Abhängigkeit des Signals die Datenrate anpasst.

7. Vorrichtung nach einem der vorhergehenden Ansprüche, **dadurch gekennzeichnet, dass** die erste Sensorik (11) derart angeordnet ist, dass die erste Sensorik (11) Kopfbewegungen des Insassen (15) erfasst.
